# EUROPEAN PATENT SPECIFICATION

(11) **EP 2 789 951 B1**
(45) Date of publication and mention of the grant of the patent: **14.10.2020**
(21) Application number: 12855454.0
(22) Date of filing: 07.11.2012
(51) Int. Cl.: F25D 23/06, F16L 59/06

(54) **INSULATED CABINET**
ISOLIERSCHRANK
ENCEINTE ISOLÉE

(30) Priority: 06.12.2011 JP 2011266795
(43) Date of publication of application: 15.10.2014
(73) Proprietor: Toshiba Lifestyle Products & Services Corporation, Ome-shi, Tokyo 198-8710 (JP)
(72) Inventor: YOSHIDA, Takaaki, Tokyo 105-8001 (JP)
(74) Representative: Hoffmann Eitle
(86) International application number: PCT/JP2012/078842
(87) International publication number: WO 2013/084647

(56) References cited:
- WO-A1-95/19255
- WO-A2-2007/046614
- JP-A- 2005 299 972
- JP-A- 2006 029 448
- JP-A- 2006 029 448
- JP-A- 2007 253 974
- JP-A- 2007 253 974
- JP-A- 2010 169 302
- JP-A- 2011 106 664
- JP-A- 2011 237 087
- US-A- 5 900 299
- US-A- 5 950 395

## Description

### Technical Field

Embodiments of the present invention relate to an insulated cabinet.

### Background Art

An insulated cabinet used in household refrigerators is constructed of insulation walls each having heat insulation properties. The insulation walls include one type in which a vacuum insulation panel is provided between an inner box and an outer box. The vacuum insulation panel is mainly constructed of a core material and an enclosure. The core material is made of, for example, glass fiber formed into a mat shape. The enclosure is made of a film having gas barrier properties. The vacuum insulation panel is formed by putting the core material into the enclosure, evacuating the enclosure and sealing an open end of the enclosure in an evacuated state, whereby an interior of the enclosure is maintained in the evacuated state. The vacuum insulation panel is thin and has a low heat conductivity and accordingly high heat insulating properties. The thicknesses of the insulation walls of the insulated cabinet can be reduced by the use of the vacuum insulation panel, with the result that a capacity of storage compartment can be increased. JP-A-2006-029448 discloses a refrigerator including vacuum insulation panels which serve as heat insulators and are applied to right and left sides, a rear and a ceiling of an outer box forming an insulated space. Spaces around the vacuum insulation panels are filled with urethane foam or the like. WO 95/19255 A1 discloses a refrigerator including an enclosed structure 40 with door assembly 22. The enclosed structure 40 includes an outer liner 42 and an inner liner 44 with a plurality of superinsulation panels 46 disposed therebetween. WO 2007/046614 A2 discloses a refrigerator including an insulation structure comprising a refrigerator cabinet having an exterior surface formed of steel and an interior surface formed of plastic, a vacuum insulation panel disposed between the exterior and interior surfaces and a gas permeation layer. The insulation structure may further comprise a refrigerating insulating portion formed of foam between the exterior and interior surfaces. JP-A-2011-106664 discloses a heat insulation box including an outer box, an inner box, a vacuum insulation material disposed in a space between the outer and inner boxes and a foam insulation filling a remaining space excluding the space occupied by the vacuum insulation material.

Further prior art is JP-A-2-728318 and JP-A-H06-147744.

JP 2006 029448 A discloses an insulated cabinet according to the preamble of claim 1.

### Summary of the Invention

### Problem to be overcome by the Invention

In order that the vacuum insulation panel may provide a high insulation performance, the interior of the enclosure needs to be maintained in a depressurized state. For this purpose, it is important to suppress deterioration of the enclosure in order that the vacuum insulation panel may retain a high insulation performance. When the vacuum insulation panel is used as the insulation walls, the insulated cabinet has the following problem. For example, liquid sometimes spills out of an article stored in a storage compartment of the insulated cabinet. When entering the insulation wall to come into contact with the vacuum insulation panel, the liquid deteriorates the enclosure of the vacuum insulation panel. A gas or the like enters the enclosure through the deteriorated part of the enclosure, increasing pressure in the enclosure. This results in a reduction in the insulation performance of the vacuum insulation panel.

In view of the foregoing problems, an object is to provide an insulated cabinet which can prevent deterioration of the vacuum insulation panel as much as possible and improve the durability of the vacuum insulation panel.

### Means for Overcoming the Problem

According to one embodiment, an insulated cabinet includes the features of claim 1. Further embodiments are named in the dependent claims.

### Brief Description of the Drawings

FIG. 1 is a perspective view of a refrigerator according to a first embodiment;
FIG. 2 is a perspective view of an insulated cabinet;
FIG. 3 is an exploded perspective view of the insulated cabinet, showing a schematic view thereof;
FIG. 4 is transversely sectional plan view of the insulated cabinet;
FIG. 5 is an enlarged transversely sectional plan view taken along line X1-X1 in FIG. 2;
FIG. 6 is an enlarged sectional view of the vacuum insulation panel;
FIG. 7 is a schematic sectional view of an insulation wall;
FIG. 8 shows results of an experiment in which the vacuum insulation panel is immersed in various types of liquids;
FIG. 9 is a view similar to FIG. 5, showing a second embodiment;
FIG. 10 is a view similar to FIG. 6, showing a third embodiment; and
FIG. 11 is a transversely sectional plan view of the insulated cabinet according to a fourth embodiment.

### Best Mode for Carrying Out the Invention

Insulated cabinets for a refrigerator according to a plurality of embodiments will be described with reference to the drawings. Substantially identical parts are labeled by the same reference symbols throughout the embodiments and the description of these parts will not be repeated.

### First Embodiment

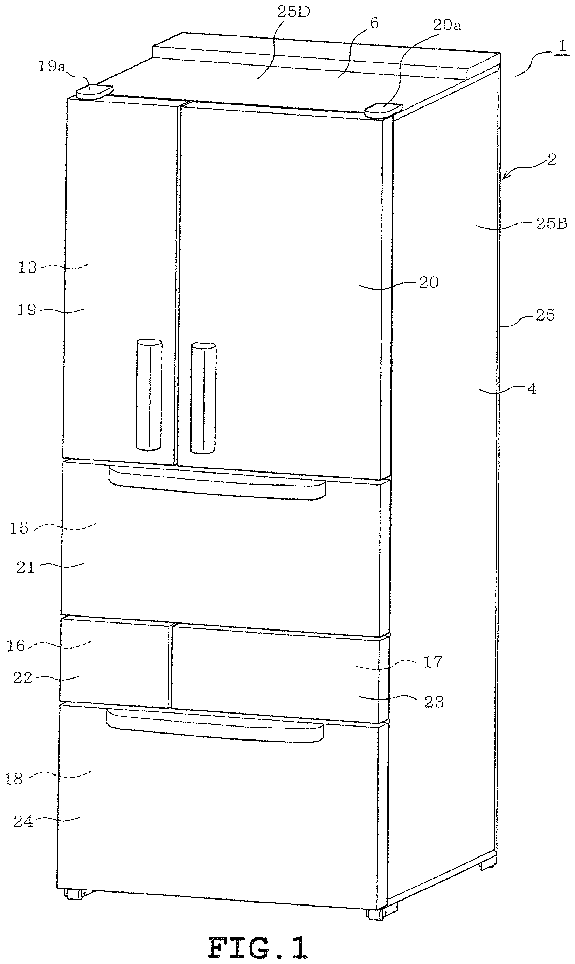

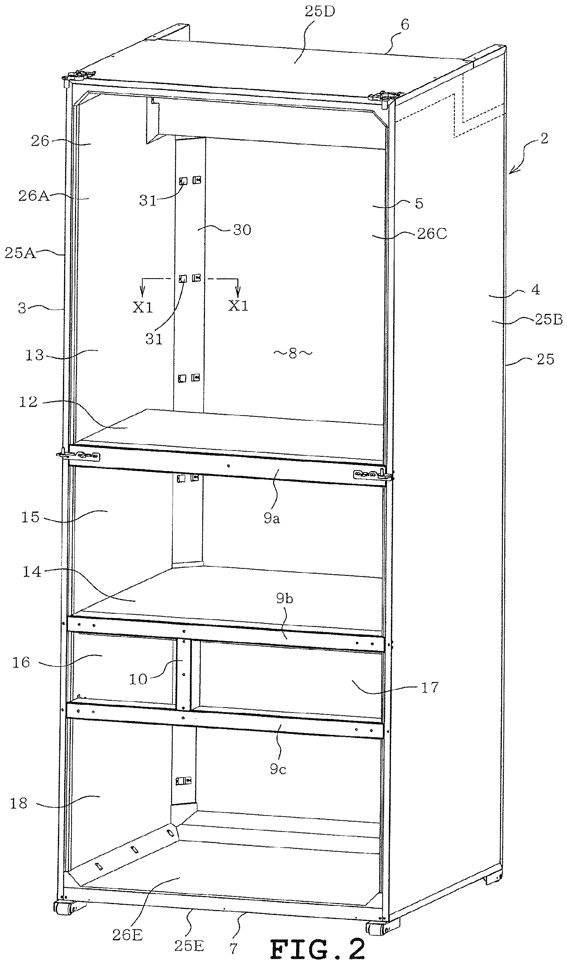

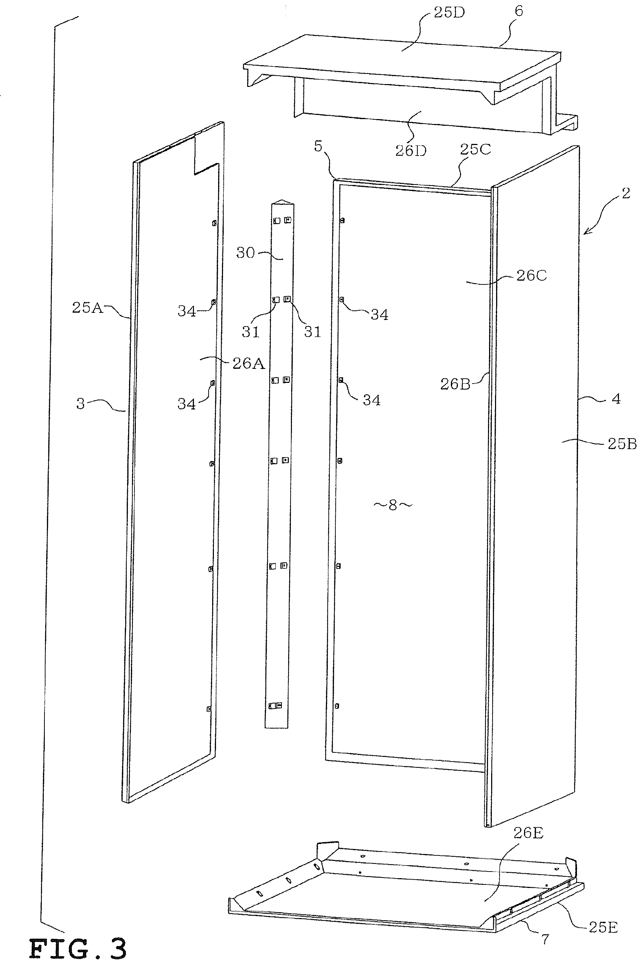

A first embodiment will be described with reference to FIGS. 1 to 8. Referring to FIG. 2, an insulated cabinet 2 includes an outer box 25, an inner box 26 provided inside the outer box 25 and is formed into a rectangular box shape. The insulated cabinet 2 has one side formed with an opening. In the following description, the open side of the insulated cabinet 2 corresponds with a front of the insulated cabinet 2. The insulated cabinet 2 includes a left sidewall 3, a right sidewall 4, a rear wall 5, a ceiling wall 6 and a bottom wall 7 all of which are made separately and then combined together, as shown in FIG. 3. In this case, the left sidewall 3, the right sidewall 4, the rear wall 5, the ceiling wall 6 and the bottom wall 7 constitute a peripheral wall of the insulated cabinet 2. The left sidewall 3, the right sidewall 4, the rear wall 5, the ceiling wall 6 and the bottom wall 7 comprise insulation walls respectively. A space surrounded by the five walls 3 to 7 serves as a storage compartment 8.

The insulated cabinet 2 includes vertically three-staged front partitions 9a, 9b and 9c, a longitudinal partition 10, a partition plate 12 and a partition wall 14 as shown in FIG. 2. The front partitions 9a, 9b and 9c are provided on the front of the insulated cabinet 2 to connect between a front of the left sidewall 3 and a front of the right sidewall 4. In this case, the upper front partition 9a, the middle front partition 9b and the lower front partition 9c are provided.

The longitudinal partition 10 is provided between the middle front partition 9b and the lower front partition 9c. The partition plate 12 is provided on the rear of the upper front partition 9a. A space above the partition plate 12 serves as a refrigerating compartment 13. The partition wall 14 is provided on the rear of the middle front partition 9b. The partition wall 14 has heat insulation properties. A space between the partition wall 14 and the partition plate 12 serves as a vegetable compartment 15. The refrigerating compartment 13 and the vegetable compartment 15 belong to a refrigerating temperature zone ranging from 1°C to 5°C.

A space on the left of the longitudinal partition 10 below the partition wall 14 serves as an ice-making compartment 16. A space on the right of the longitudinal partition 10 below the partition wall 14 serves as a small freezing compartment 17. A space below the lower front partition 9c serves as a main freezing compartment 18. The ice-making compartment 16, the small freezing compartment 17 and the main freezing compartment 18 belong to a freezing temperature zone at about -20°C.

The refrigerator 1 includes two doors 19 and 20 each having insulation properties as shown in FIG. 1. The doors 19 and 20 are provided on the front of the refrigerating compartment 13 and constitute a clamshell door pivotally supported by hinges 19a and 20a respectively. The refrigerator 1 further includes pullout doors 21, 22, 23 and 24 each having insulation properties. The vegetable compartment 15 is opened and closed by the door 21. The ice-making compartment 16 is opened and closed by the door 22. The small freezing compartment 17 is opened and closed by the door 23. The main freezing compartment 18 is opened and closed by the door 24.

The left sidewall 3 is constructed of an outer plate 25A constituting the outer box 25, an inner plate 26A constituting the outer box 26 and a vacuum insulation panel 27 interposed between the outer and inner plates 25A and 26A. The left sidewall 3 has a rear end having a foam insulation 28 provided to cover a rear end of the vacuum insulation panel 27. The right sidewall 4 is constructed in the same manner as the left sidewall 3. More specifically, the right sidewall 4 is also constructed of an outer plate 25B constituting the outer box 25, an inner plate 26B constituting the outer box 26 and a vacuum insulation panel 27 interposed between the outer and inner plates 25B and 26B. The right sidewall 4 also has a rear end having a foam insulation 28 provided to cover a rear end of the vacuum insulation panel 27. The rear wall 5 is basically constructed in the same manner as the left sidewall 3. More specifically, the rear wall 5 is also constructed of an outer plate 25C constituting the outer box 25, an inner plate 26C constituting the outer box 26 and a vacuum insulation panel 27 interposed between the outer and inner plates 25C and 26C. The rear wall 5 has right and left ends having foam insulations 28 provided to cover right and left ends of the vacuum insulation panel 27 respectively.

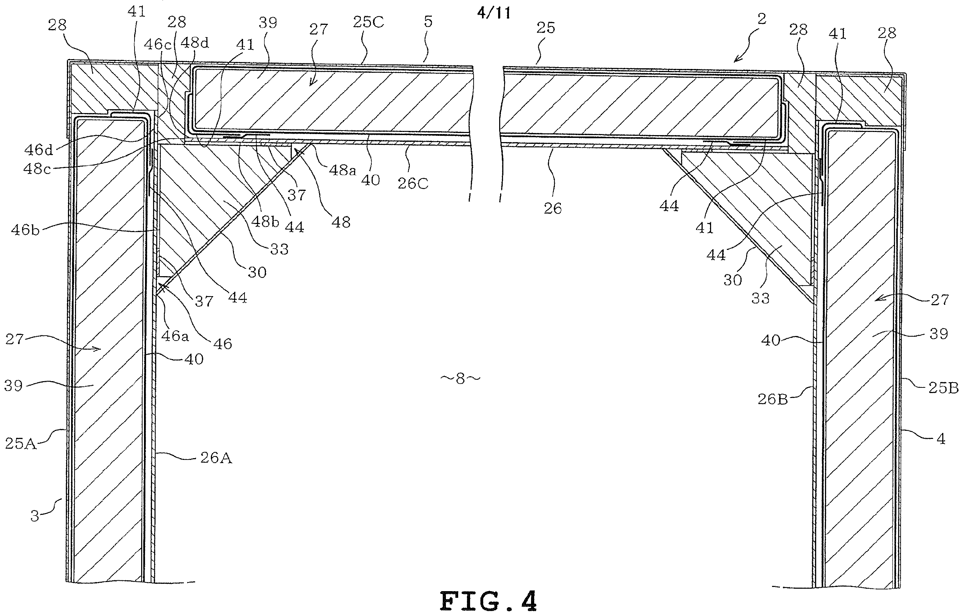

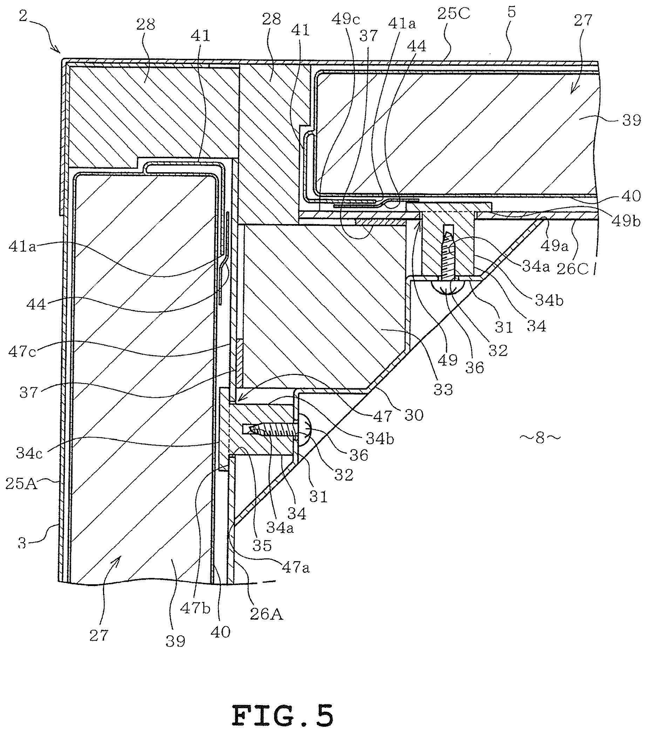

The vacuum insulation panel 27 of the left sidewall 3 is bonded to at least one of the outer plate 25A and the inner plate 26A by an adhesive agent or the like thereby to be fixed. In the same manner, the vacuum insulation panel 27 of the right sidewall 4 is bonded to at least one of the outer plate 25B and the inner plate 26B by an adhesive agent or the like thereby to be fixed. Further, the rear wall 5 is bonded to at least one of the outer plate 25C and the inner plate 26C by an adhesive agent or the like thereby to be fixed. The adhesive agent is hot melt or the like and is eliminated in FIGS. 4 and 5.

The ceiling wall 6 is constructed of an outer plate 25D constituting the outer box 25, an inner plate 26D constituting the outer box 26, and a vacuum insulation panel (not shown) and a foam insulation (not shown) both interposed between the outer and inner plates 25D and 26D. Further, the bottom wall 7 is also constructed of an outer plate 25E constituting the outer box 25, an inner plate 26E constituting the outer box 26, and a vacuum insulation panel (not shown) and a foam insulation (not shown) both interposed between the outer and inner plates 25E and 26E. The vacuum insulation panel (not shown) of the ceiling wall 6 is bonded to the inner plate 26D by an adhesive agent such as hot melt thereby to be fixed. The vacuum insulation panel (not shown) of the bottom wall 7 is also bonded to the inner plate 26E by the adhesive agent such as hot melt thereby to be fixed.

Each one of the outer plates 25A to 25E comprises a metal plate such as steel plate. The outer plates 25A to 25E form the outer box 25 serving as an outer shell of the insulated cabinet 2. Each one of the inner plates 26A to 26E comprises a synthetic resin and forms the inner box 26 of the insulated cabinet 2. A space surrounded by the inner box 26 serves as the storage compartment 8.

The left sidewall 3 is connected via a connecting member 30 to the rear wall 5. The connecting structure will now be described. The connecting member 30 is provided at a left rear corner formed by the left sidewall 3 and the rear wall 5 as shown in FIG. 3. The connecting member 30 extends in the up-down direction and is made of synthetic resin, for example. The connecting member 30 has right and left sides each of which is formed with a plurality of recess-shaped stepped portions 31, as shown in FIG. 5. The stepped portions 31 have respective through screw holes 32. A triangular prismatic radiation material 33 is provided in the rear of the connecting member 30. More specifically, the insulation material 33 is provided in a space surrounded by the connecting member 30, the left sidewall 3 and the rear wall 5. The insulation material 33 is a polystyrene foam product, for example.

Each of the left sidewall 3 and the rear wall 5 has a plurality of fixtures 34. The fixtures 34 are provided on a rear part of the inner plate 26A and a left part of the inner plate 26C of the rear wall 5 so as to correspond to the stepped portions 31 of the connecting member 30 respectively, as shown in FIG. 5. The fixtures 34 are made of synthetic resin and each formed into a prismatic shape. The fixtures 34 have respective bosses 34b and respective flanges 34c. The bosses 34b are formed with respective screw holes 34a. The flanges 34c are provided at proximal ends of the bosses 34b, namely, ends of the bosses 34b located at the vacuum insulation panel 27 side, extending around.

The inner plates 26A and 26C have openings 35 which are formed to correspond to the fixtures 34 respectively. The boss 34b of each fixture 34 is inserted through the corresponding opening 35 from the rear of the inner plates 26A and 26C, protruding to the storage compartment 8 side. The flange 34c of each fixture 34 is bonded by an adhesive agent or the like to rear surfaces of the inner plates 26A and 26C, namely, surfaces of the inner plates 26A and 26c located at the vacuum insulation panel 27 side thereby to be fixed. The fixtures 34 are thus mounted to the inner plates 26A and 26C.

The connecting member 30 is disposed so that the insertion holes 32 of the stepped portions 31 are superposed on the screw holes 34a of the fixture 34 respectively. The screws 36 having been passed through the insertion holes 32 from the storage compartment 8 side are screwed into the screw holes 34a of the fixture 34 respectively. As a result, the connecting member 30 is fixed to the fixtures 34 thereby to connect between the inner plate 26A of the left sidewall 3 and the inner plate 26C of the rear wall 5. More specifically, the left sidewall 3 and the rear wall 5 are connected to each other by the connecting member 30 so as to be perpendicular to each other. A sheet-shaped sealing member 37 is provided between the insulation material 33 and the inner plates 26A and 26C.

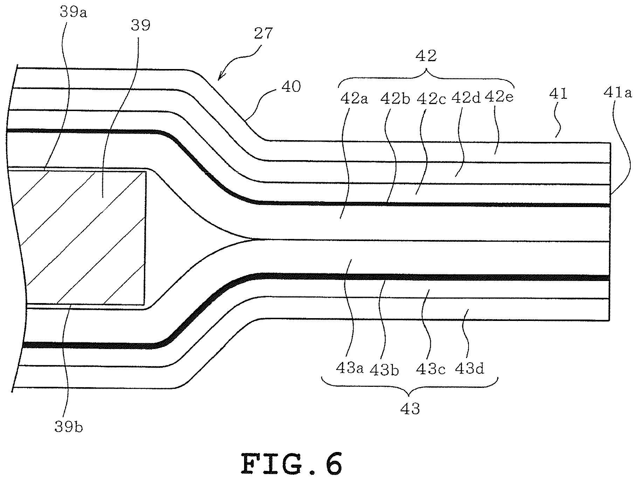

The right sidewall 4 and a right part of the rear wall 5 are connected to each other in the same manner as the left sidewall 3 and the left part of the rear wall 5. Accordingly, the connection between the walls 4 and 5 is not shown in the drawing and the description of the connection will be eliminated. The construction of the vacuum insulation panel 27 will now be described with reference to FIG. 6. The vacuum insulation panel 27 is constructed of a core material 39 and an enclosure 40. The core material 39 is made of glass fiber, for example and formed into a mat shape, functioning as a core. The enclosure 40 is constructed of a film having gas barrier properties. The vacuum insulation panel 27 is constructed as follows. Firstly, the core material 39 is put into the enclosure 40. An open end of the enclosure 40 is sealed while an interior of the enclosure 40 is evacuated, whereby a sealed part 41 is formed. As a result, the interior of the enclosure 40 is maintained in a depressurized state. The vacuum insulation panel 27 has lower heat conductivity and accordingly higher insulating properties than other insulation materials such as urethane foam. Consequently, the thickness of the vacuum insulation panel 27 can be reduced to a large degree when the vacuum insulation panel 27 provides the same insulation performance as the other insulation materials such as urethane foam.

The enclosure 40 of the vacuum insulation panel 27 includes a first film 42 and a second film 43 as shown in FIG. 6. The first film 42 covers a first surface 39a of the core material 39. The second film 43 covers a second surface 39b located opposite the first surface 39a.

The first film 42 is formed into a five-layer structure having a PE layer 42a, a vapor-deposited metal layer 42b, an EVOH layer 42c, a nylon layer 42d and a PET layer 42e. The PE layer 42a is provided at an innermost part of the first film 42 or at the core material 39 side. The PE layer 42a is composed of polyethylene and serves as an inner weld metal layer. The vapor-deposited metal layer 42b is a metal layer such as aluminum deposited on the EVOH layer 42c. In this case, the vapor-deposited metal layer 42b will be referred to as "vapor-deposited aluminum layer 42b." The EVOH layer 42c is made of an ethylene-vinylalcohol copolymer. For example, a resin called "EVAL" (a trademark registered in Japan) is known as the ethylene-vinylalcohol copolymer. The nylon layer 42d is made of nylon. The PET layer 42e is made of polyethylene terephthalate. The PET layer 42e constitutes an outermost surface layer of the first film 42.

The second film 43 is formed into a four-layer structure having a PE layer 43a, a metal foil layer 43b, a nylon layer 43c and a PET layer 43d. The PE layer 43a is provided at an innermost part of the second film 43 or at the core material 39 side. The PE layer 43a is composed of polyethylene and serves as an inner weld metal layer. The metal foil layer 43b is an aluminum foil layer, for example. In this case, the metal foil layer 43b will be referred to as "aluminum foil layer 43b." The nylon layer 43c is made of nylon. The PET layer 43d is made of polyethylene terephthalate. The PET layer 43d constitutes an outermost surface layer of the second film 43.

The PET layer 42a serving as the weld layer has high chemical resistance, low water absorbability and superior heat weldability. Accordingly, the PET layers 42a and 43a are suitable to form the sealed part 41 by heat welding. The EVOH layer 42c provided with the vapor-deposited aluminum layer 42b and the aluminum foil layer 43b are superior in gas barrier properties. The nylon layers 42d and 43c are flexible and hard to prick with an external protrusion or the like. The PET layers 42e and 43d are high in strength and stiffness and further in chemical resistance.

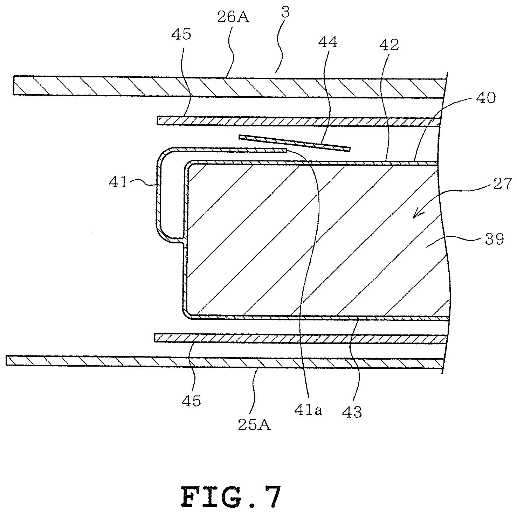

The sealed part 41 of the enclosure 40 is formed by superposing the PET layers 42a and 43a of the first and second films 42 and 43 and heat-welding an open end of the superposed PET layers. The sealed part 41 of the enclosure 40 is bent to the first film 42 side as shown in FIG. 7. The sealed part 41 has an end surface 41a retained on the first film 42 by an adhesive tape 44.

FIG. 7 shows the construction of the left sidewall 3 as an end of each vacuum insulation panel 27. The vacuum insulation panel 27 provided at the left sidewall 3 part includes a side where the adhesive tape 44 is affixed, namely, the first film 42 side, which is bonded to the inner plate 26A by the adhesive agent 45 thereby to be fixed. Further, the second film 43 side of the vacuum insulation panel 27 is bonded to the outer plate 25A by the adhesive agent 45 thereby to be fixed. Further, a rear end of the vacuum insulation panel 27 in the left sidewall 3 is covered by the foam insulation 28 as shown in FIG. 4. More specifically, the foam insulation 28 provided on the rear end of the left sidewall 3 covers an end of the vacuum insulation panel 27 located at the sealed part 41 of the enclosure 41. The right sidewall 4 side is also constructed in the same manner as the left sidewall 3.

Also in the vacuum insulation panel 27 provided on the rear wall 5, the side where the adhesive tape 44 is affixed or the first film 42 side is bonded to the inner plate 26C, and the second film 43 side is bonded to the outer plate 25C. In the rear wall 5, the vacuum insulation panel 27 has right and left ends covered with the foam insulation 28. More specifically, the foam insulations 28 provided at right and left ends of the rear wall 5 cover ends at the sides where the sealed parts 41 of the enclosures 40 of the vacuum insulation panels 27 are located, respectively. In this case, the foam insulations 28 and the adhesive tapes 44 in the walls 3 to 7 constitute limiting members which limit fluid invading the enclosures 40 from the sealed parts 41 of the enclosure 40 of the vacuum insulation panels 27.

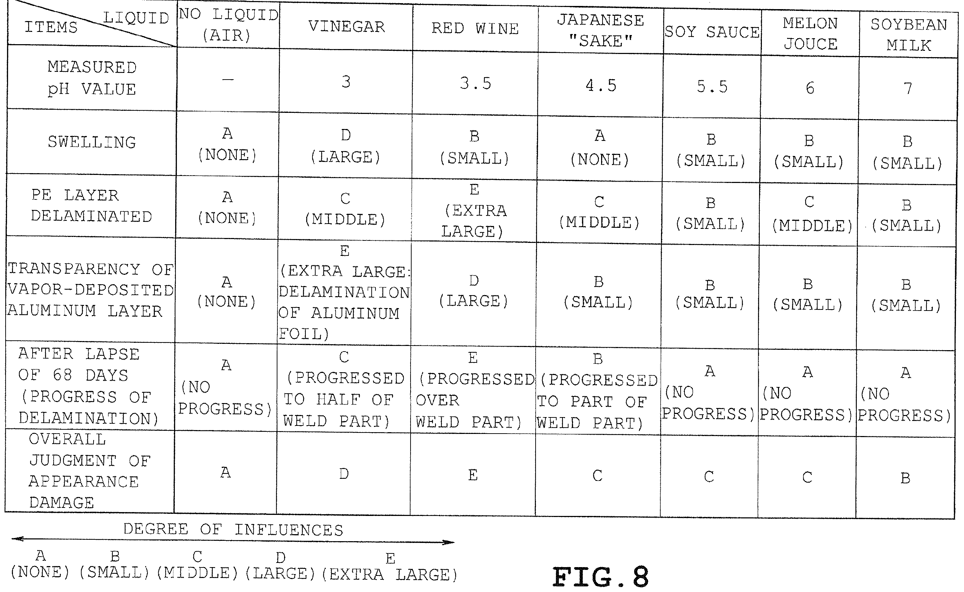

It is anticipated that various types of liquids sometimes spill out of articles stored in the storage compartment 8. FIG. 8 shows results of an experiment to search influences upon the vacuum insulation panel 27 in the case where liquids of vinegar, red wine, Japanese "sake," soy sauce, melon juice and soybean milk come into contact with the vacuum insulation panel 27. The experimental results in FIG. 8 show various changes caused in the enclosure 40 after the vacuum insulation panel 27 is soaked in the liquids and then left for a predetermined period, for example, 68 days. FIG. 8 further shows, as a target for comparison, changes in the enclosure 40 in the case where the vacuum insulation panel 27 is not soaked in the liquids, that is, the vacuum insulation panel 27 is left in air, as "no liquids." In FIG. 8, columns of the liquids show influences of the liquids on the enclosure 40 in five-grade evaluation of A to E. In this case, grade A indicates that almost no change occurred in the enclosure 40. The changes occurred in the enclosure 40 become larger in the order of B, C, D and E. In the experiment, the sealed part of the vacuum insulation panel 27 was not taped and the end surface 41a of the sealed part 41 was exposed.

The following can be found from the experimental results. As shown by the column of "no liquids" in FIG. 8, no damage was found in an appearance of the enclosure 40 even after the vacuum insulation panel 27 was left in the air for 68 days. However, when the vacuum insulation panel 27 was soaked in the liquids, delamination was found in the sealed part 41 of the enclosure 40. The delamination of the sealed part 41 was clearer when the liquid had a relatively lower pH value and was highly acidic, such as red wine and vinegar. Occurrence of delamination in the sealed part 41 reduces the gas barrier properties of the enclosure 40 and the insulation performance of the vacuum insulation panel 27.

The following is considered as a mechanism of reduction in the gas barrier properties. Many types of liquids used in the experiment swell bibulous materials such as the EVOH layer 42c and nylon layers 42d and 43c of the enclosure 40, causing delamination in joint areas of the layers. The liquid having entered the layers by moisture adsorption or invasion from a delaminated part erodes, oxidizes and disperses the vapor-deposited aluminum layer 42b and the like when having higher acidity. An external gas invades the interior of the enclosure 40 through the gas-permeable PE layers 42a and 43a from the delaminated part or the damaged part where the vapor-deposited aluminum layer 42b has disappeared.

Liquid sometimes spills out of an article stored in the storage compartment 8. When the spilled liquid reaches the vacuum insulation panel 27 in the insulated cabinet 2, there is a possibility that the enclosure 40 would be deteriorated due to delamination in the sealed part 41 or for another reason, as shown in the above-described experimental results. In this case, the enclosure 40 further deteriorates upon lapse of a long period of time. An external gas then invades the interior of the enclosure 40, thereby reducing the insulation performance of the vacuum insulation panel 27.

In the embodiment, the liquid spilled from the article stored in the storage compartment 8 is considered to reach the vicinity of the sealed part 41 of the vacuum insulation panel 27 in the left sidewall 3 through the following first or second pathway. The first pathway is shown as a first fluid invadable region 46 in FIG. 4. The first fluid invadable region 46 is a pathway connecting gaps 46a, 46b, 46c and 46d to one another. The gap 46a is defined between an end of the connecting member 30 and the inner plate 26A of the left sidewall 3. The gap 46b is defined between the insulation material 33 and the inner plate 26A of the left sidewall 3. The gap 46c is defined between the inner plate 26A of the left sidewall 3 and the foam insulation 28 of the rear wall 5. The gap 46d is defined between the enclosure 40 of the vacuum insulation panel 27 and the foam insulation 28 of the left sidewall 3.

Further, the second pathway is shown as a second fluid invadable region 47 in FIG. 5. The second fluid invadable region 47 is a pathway connecting a gap 47a, the opening 35 of the inner plate 26A, a gap 47b and a gap 47c to one another. The gap 47a is defined between an end of the connecting member 30 and the inner plate 26A of the left sidewall 3. The gap 47b is defined between the flange 34c of the fixture 34 and the inner plate 26A. The gap 47c is defined between the enclosure 40 of the vacuum insulation panel 27 and the inner plate 26A. Since the second fluid invadable region 47 has a midway opening 35 formed in the inner plate 26A, there is a high possibility that liquid at the storage compartment 8 side would invade the vacuum insulation panel 27 side.

The sealing member 37 and the foam insulation 28 are provided midway in the first fluid invadable region 46. The sealing member 37 closes a part or a whole of the gap 46b between the insulation material 33 and the inner plate 26A of the left sidewall 3. The foam insulation 28 is provided on a rear end of the vacuum insulation panel 27 in the left sidewall 3. According to this construction, liquid spilled in the storage compartment 8 is hard to reach the vicinity of the sealed part 41 of the vacuum insulation panel 27 through the first fluid invadable region 46. Moreover, since the end surface 41a of the sealed part 41 of the vacuum insulation panel 27 is covered with the adhesive tape 44, the invasion of the liquid from the end surface 41a can be effectively reduced.

Further, in the second fluid invadable region 47, the flange 34c of the fixture 34 is bonded to the peripheral edge of the opening 35 for mounting the fixture 34 by the adhesive agent. In this case, the gap 47b between the flange 34c and the inner plate 26A is filled with the adhesive agent. Further, the enclosure 40 of the vacuum insulation panel 27 is bonded to the inner plate 26A by the adhesive agent 45 as shown in FIG. 7. Accordingly, the gap 47c between the vacuum insulation panel 27 and the inner plate 26A is filled with the adhesive agent 45. This can suppress reach of the liquid to the vicinity of the sealed part 41 through the second fluid invadable region 47. Moreover, in this case, the end surface 41a of the sealed part 41 is covered with the adhesive tape 44 with the result that invasion of the liquid from the end surface 41a can be effectively suppressed.

A pathway through which liquid spilled from the article stored in the storage compartment 8 reaches the vicinity of the sealed part 41 of the vacuum insulation panel 27 in the right sidewall 4 is similar to the above-described pathway of the left sidewall 3. Accordingly, the description of the pathway will be eliminated.

Further, the liquid spilled from the article stored in the storage compartment 8 is considered to reach the vicinity of the sealed part 41 of the vacuum insulation panel 27 in the rear wall 5 through the following third or fourth pathway. The third pathway is shown as a third fluid invadable region 48 in FIG. 4. The third fluid invadable region 48 is a pathway connecting gaps 48a, 48b, 48c and 48d to one another. The gap 48a is defined between an end of the connecting member 30 and the inner plate 26C of the rear wall 5. The gap 48b is defined between the insulation material 33 and the inner plate 26C of the rear wall 5. The gap 48c is defined between the inner plate 26C and the foam insulation 28. The gap 48d is defined between the enclosure 40 of the vacuum insulation panel 27 and the inner plate 26C.

Further, the fourth pathway is shown as a fourth fluid invadable region 49 in FIG. 5. The fourth fluid invadable region 49 is a pathway connecting a gap 49a, the opening 35 of the inner plate 26C, a gap 49b and a gap 49c to one another. The gap 49a is defined between an end of the connecting member 30 and the inner plate 26C of the rear wall 5. The gap 49b is defined between the flange 34c of the fixture 34 and the inner plate 26C. The gap 49c is defined between the enclosure 40 of the vacuum insulation panel 27 and the inner plate 26C. Since the fourth fluid invadable region 49 has a midway opening 35 formed in the inner plate 26C, there is a high possibility that liquid at the storage compartment 8 side would invade the vacuum insulation panel 27 side.

The sealing member 37 and the foam insulation 28 are provided midway in the third fluid invadable region 48. The sealing member 37 closes the gap 48a between the insulation material 33 and the inner plate 26C of the rear wall 5. The foam insulations 28 are provided on right and left ends of the vacuum insulation panel 27 in the rear wall 5. According to this construction, liquid spilled in the storage compartment 8 is hard to reach the vicinity of the sealed part 41 of the vacuum insulation panel 27 through the third fluid invadable region 48. Moreover, since the end surface 41a of the sealed part 41 of the vacuum insulation panel 27 is covered with the adhesive tape 44, the invasion of the liquid from the end surface 41a can be effectively reduced.

Further, in the fourth fluid invadable region 49, the flange 34c of the fixture 34 is bonded to the peripheral edge of the opening 35 for mounting the fixture 34 by the adhesive agent. In this case, the gap 49b between the flange 34c and the inner plate 26C is filled with the adhesive agent. Further, the enclosure 40 of the vacuum insulation panel 27 is bonded to the inner plate 26C by the adhesive agent 45 as shown in FIG. 7. Accordingly, the gap 49b between the vacuum insulation panel 27 and the inner plate 26C is filled with the adhesive agent 45. This can suppress reach of the liquid to the vicinity of the sealed part 41 through the fourth fluid invadable region 49. Moreover, in this case, the end surface 41a of the sealed part 41 is covered with the adhesive tape 44 with the result that invasion of the liquid from the end surface 41a can be effectively suppressed.

Each of the ceiling wall 6 and the bottom wall 7 is also provided with the vacuum insulation panel 27 constructed in the same manner as described above although the vacuum insulation panel 27 is not shown. In each vacuum insulation panel 27, the end surface 41a of the sealed part 41 of the enclosure 40 is covered with the adhesive tape 44. Further, the peripheral end of the vacuum insulation panel 27 is covered with the foam insulation 28. Accordingly, liquid spilled in the storage compartment 8 is hard to reach the vicinity of the sealed part 41 of the vacuum insulation panel 27 in each of the ceiling wall 6 and the bottom wall 7. This can also suppress invasion of liquid from the end surface 41a of the sealed part 41 effectively.

Further, the foregoing embodiment can also achieve the following effect. The enclosure 40 of the vacuum insulation panel 27 provided in each one of the walls 3 to 7 includes the first film 42 and the second film 43 each of which is formed by stacking a plurality of layers. The outermost surface layers of the first and second films 42 and 43 are composed of the PET layers 42e and 43d respectively. Since the PET layers 42e and 43d are high in strength and stiffness and further in chemical resistance, the PET layers 43e and 43d are hard to deteriorate, the durability of the enclosure 40 can be improved.

It is considered that the surface layers of the first and second films 42 and 43 are composed of a nylon layer. However, since the nylon layer tends to absorb moisture and has a low chemical resistance, the nylon layer has a defect of tending to deteriorate. However, the above-described embodiment can prevent the defect.

Further, the first film 42 has the PET layer 42a serving as the weld layer which is welded when the open end of the enclosure 40 is sealed. The second film 43 also has the PE layer 43a serving as the weld layer which is welded when the open end of the enclosure 40 is sealed. The PET and PE layers 42a and 43a have high chemical resistance, low water absorbability and superior heat weldability and are accordingly suitable to form the sealed part 41 by heat welding. PP, namely, polypropylene may be used to constitute the weld layer, instead of PE.

### Second Embodiment

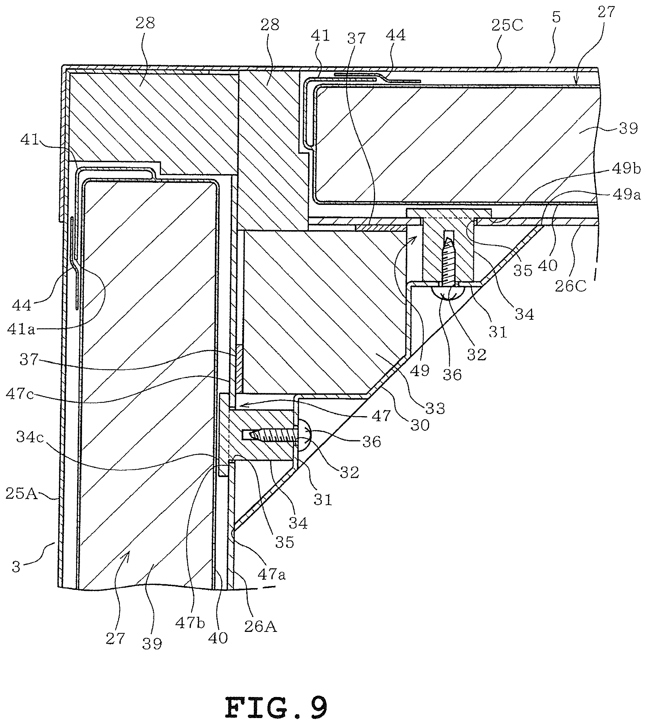

FIG. 9 illustrates a second embodiment. The second embodiment differs from the first embodiment in the following respects. The sealed part 41 of the enclosure 40 is folded back to the outer plate 25A side in the vacuum insulation panel 27 of the left sidewall 3. The end surface 41a of the sealed part 41 is covered by the adhesive tape 44 thereby to be fixed. In the same manner, the sealed part 41 of the enclosure 40 of the vacuum insulation panel 27 is folded back to the outer plate 25C side in the rear wall 5. The end surface 41a of the sealed part 41 is covered by the adhesive tape 44 thereby to be fixed. The sealed part 41 of the enclosure 40 of the vacuum insulation panel 27 is also folded back to the outer plate 25B side in the right sidewall 4 although this is not shown. Further, in the ceiling wall 6, too, the sealed part 41 of the enclosure 40 of the vacuum insulation panel 27 is folded back to the outer plate 25D side. Still further, the sealed part 41 of the enclosure 40 of the vacuum insulation panel 27 is also folded back to the outer plate 25E side in the bottom wall 7. In each of the right sidewall 4, the ceiling wall 6 and the bottom wall 7, the end surface 41a of the sealed part 41 is covered with the adhesive tape 44 thereby to be fixed.

According to this construction, the end surface 41a of the sealed part 41 in the vacuum insulation panel 27 can be caused to stay away from the storage compartment 8 in each of the insulation walls 3 to 7. Accordingly, the liquid from the storage compartment 8 is hard to reach the end surface 41a of the enclosure 40 with the result that deterioration of the sealed part 41 of the vacuum insulation panel 27 can be further reduced.

### Third Embodiment

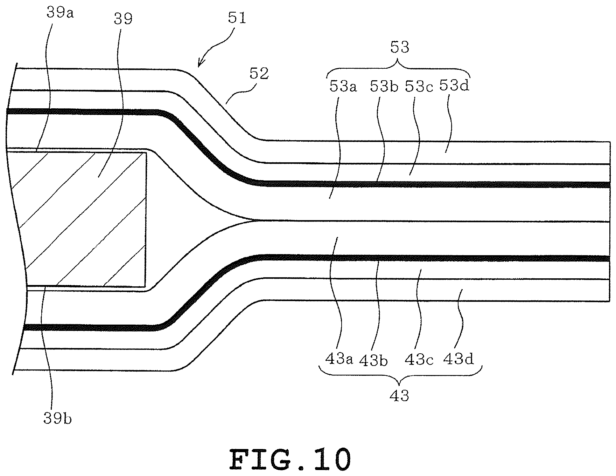

FIG. 10 illustrates a third embodiment. The third embodiment differs from the first embodiment in the following respects. The first film 53 is configured in the same manner as the second film 43 in the enclosure 52 of the vacuum insulation panel 51. More specifically, the first film 53 is formed into a four-layer structure including a PE layer 53a serving as an inner weld layer, an aluminum foil layer 53b as the metal foil layer, a nylon layer 53c and a PET layer 53d serving as an outermost surface layer. That is, the first film 53 in the third embodiment has the aluminum foil layer 53b, instead of the vapor-deposited aluminum layer 42b of the first film 42 and the EVOH layer 42c in the first embodiment.

According to this construction, the second film 43 has the aluminum foil layer 43b superior in the gas barrier properties . The first film 53 also has the aluminum foil layer 53b superior in the gas barrier properties. The vapor-deposited aluminum layer 42b has a thickness of not more than 0.1 µm. Accordingly, the vapor-deposited aluminum layer 42b is easily caused to disappear by oxidation when liquid such as acid invades the vapor-deposited aluminum layer 42b. On the other hand, each of the aluminum foil layers 53b and 43b is harder to oxidize and disappear and is superior in the barrier properties as compared with the vapor-deposited aluminum layer 42b. As a result, even when an acid liquid contacts the enclosure 40, deterioration of the enclosure 40 can be reduced with the result that the durability of the enclosure 40 can be improved.

### Fourth Embodiment

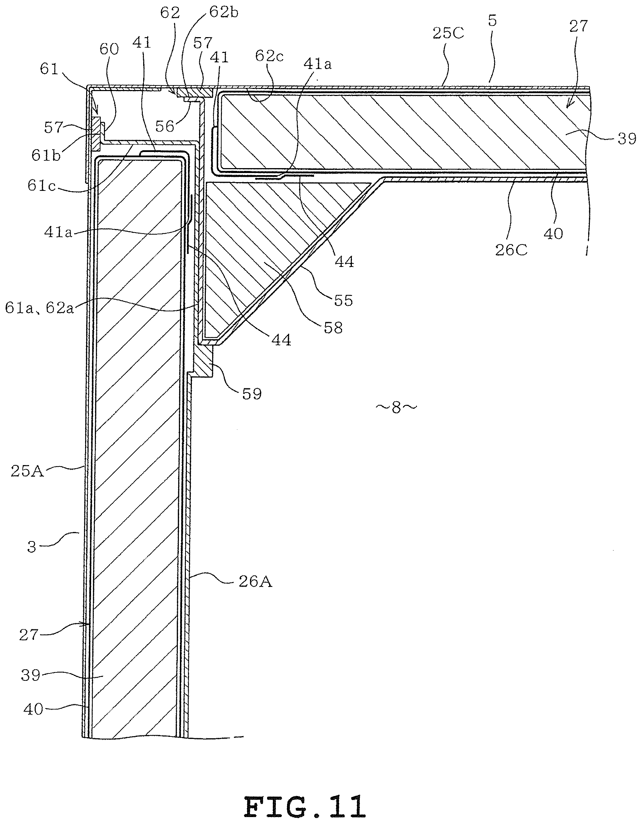

FIG. 11 illustrates a fourth embodiment. The fourth embodiment differs from the first embodiment in the following respects. The rear wall 5 has two protrusions 55. FIG. 11 shows only a left end of the rear wall 5. The protrusion 55 is located between right and left ends of the inner plate 26C and formed integrally with the inner plate 26C. The protrusion 55 protrudes forward or to the storage compartment 8 side. The protrusion 55 is formed into a right-angled triangle shape as viewed from above. An end of the inner plate 26C is directed rearward and abutted on an inner surface of the outer plate 25C via the sealing member 57. A triangular prismatic insulation material 58 which is a polystyrene foam product is enclosed in the interior of the protrusion 55.

The left sidewall 3 has a positioning protrusion 59, which is located in the rear of the inner plate 26A and protrudes rightward or to the storage compartment 8 side. The positioning protrusion 59 is formed integrally with the inner plate 26A. A front end of the protrusion 55 of the rear wall 5 is butted against a rear surface of the positioning protrusion 59 of the left sidewall 3, so that a relative positional relation is determined between the rear wall 5 and the left sidewall 3. A rear end 60 of the inner plate 26A is directed leftward and abutted on an inner surface of the outer plate 25C via the sealing member 57. The same construction as described above is also provided between the rear wall 5 and the right sidewall 4 although this is not shown.

Liquid spilled from the article stored in the storage compartment 8 is considered to reach the vicinity of the sealed part 41 of the vacuum insulation panel 27 in the rear wall 5 through the following fifth pathway. The fifth pathway is shown as a first fluid invadable region 61 in FIG. 11. The first fluid invadable region 61 is a pathway connecting a gap 61a, an outer surface of the inner plate 26A of the rear wall 5, a gap 61b, a gap 61c to one another. The gap 61a is defined between the inner plate 26A including the positioning protrusion 59 of the left sidewall 3 and the protrusion 55 of the inner plate 26A. The gap 61b is defined between the rear end 60 of the inner plate 26A and enclosure 40 of the outer plate 25A. The gap 61c is defined between the inner plate 26A and the enclosure 40 of the vacuum insulation panel 27.

The sealing member 57 is provided midway in the first fluid invadable region 61. The sealing member 57 closes a gap between the rear end 60 of the inner plate 26A and the outer plate 25A. According to this construction, liquid spilled in the storage compartment 8 is hard to reach the vicinity of the sealed part 41 of the vacuum insulation panel 27 through the first fluid invadable region 61. Moreover, since the end surface 41a of the sealed part 41 of the vacuum insulation panel 27 is covered by the adhesive tape 44, the invasion of liquid from the end surface 41a can be suppressed more effectively. The right sidewall 4 side is constructed in the same manner as described above regarding the left sidewall 3 side.

Further, the liquid spilled in the storage compartment 8 is considered to reach the vicinity of the sealed part 41 of the vacuum insulation panel 27 through the following sixth pathway. The sixth pathway is shown as the second fluid invadable region 62 in FIG. 11. The second fluid invadable region 62 connects the gap 62a, the outer surface of the inner plate 26C of the rear wall 5, the gap 62b and the gap 62c to one another. The gap 62a is defined between the inner plate 26A of the left sidewall 3 and the inner plate 26C of the rear wall 5. In this case, the gap 62a is identical with the gap 61a. The gap 62b is defined between the end 56 of the inner plate 26C and the outer plate 25C. The gap 25c is defined between the inner plate 26C and the enclosure 40 of the vacuum insulation panel 27.

The sealing member 57 is also provided midway in the second fluid invadable region 62. The sealing member 57 closes the gap 62b between the end 56 of the inner plate 26C and the outer plate 25C. According to this construction, liquid spilled in the storage compartment 8 is hard to reach the vicinity of the sealed part 41 of the vacuum insulation panel 27 through the second fluid invadable region 62. Moreover, since the end surface 41a of the sealed part 41 of the vacuum insulation panel 27 is covered by the adhesive tape 44, the invasion of liquid from the end surface 41a can be suppressed more effectively.

A foam insulation may be provided in the left sidewall 3 so as to cover the rear end of the vacuum insulation panel 27. Further, a foam insulation may be provided in the rear wall 5 so as to cover the right and left ends of the vacuum insulation panel 27. This can further suppress reach of the liquid spilled at the storage compartment 8 side to the vicinity of the sealed part 41 of the vacuum insulation panel 27.

### Other Embodiments

All the outer plates 25A to 25E constituting the outer box 25 need not be separate from one another. A part of the outer plates 25A to 25E may be connected to each other. Further, the inner plates 26A to 26E constituting the inner box 26 need not be separate from one another, either. A part of the inner plates 26A to 26E may be connected to each other.

The insulated cabinet should not be limited to the use with the refrigerator but may be used as a heating cabinet, a freezing display case or other constant-temperature cabinets.

While certain embodiments have been described, these embodiments have been presented by way of example only, and are not intended to limit the scope of the invention. Indeed, the novel embodiments described herein may be embodied in a variety of other forms provided they are within the scope of the accompanying claims.

As described above, the insulated cabinet of each foregoing embodiment is provided with the limiting members each of which limits a fluid invading the enclosure of the vacuum insulation panel from the sealed part of the enclosure. According to this, deterioration of the vacuum insulation panel can be prevented as much as possible with the result that the durability of the vacuum insulation panel can be improved.

## Claims

1. An insulated cabinet comprising:
an outer plate (25a) constituting an outer box (25);
an inner plate (26a) constituting an inner box (26) provided inside the outer box (25) and forming a storage compartment (8) surrounded by the inner box (26);
a vacuum insulation panel (27) interposed between the outer plate (25a) and the inner plate (26a) and formed by decompressing an interior of an enclosure (40) with a core material (39) being enclosed in the enclosure (40) and by sealing an open end of the enclosure (40); and
a limiting member which limits invasion of a fluid from the sealed part of the enclosure (40) of the vacuum insulation panel (27) into the enclosure (40), **characterized by**
a fluid invadable region (46, 47, 48, 49, 61, 62) provided between the storage compartment (8) and the vacuum insulation panel (27) so that a fluid is invadable therethrough.

2. The insulated cabinet according to claim 1, wherein the limiting member includes an adhesive tape (44) covering at least an end surface of the sealed part of the enclosure (40) .

3. The insulated cabinet according to claim 1 or 2, wherein the limiting member includes a foam insulation (28) which is provided in the vacuum insulation panel (27) so as to cover an end of the vacuum insulation panel (27), in which end the sealed part of the enclosure (40) is located.

4. The insulated cabinet according to any one of claims 1 to 3, wherein the vacuum insulation panel (27) has one end contacting the inner plate (26a).

5. The insulated cabinet according to claim 4, wherein the fluid invadable region (46, 47, 48, 49, 61, 62) has an opening (35) formed in the inner plate (26a).

6. The insulated cabinet according to any one of claims 1 to 5, wherein the inner box (26) is constructed by combining a plurality of divided inner plates (26A, 26B) together.

7. The insulated cabinet according to any one of claims 1 to 6, wherein the enclosure (40) is formed by a film (42, 43) further formed by stacking a plurality of layers, and an outermost surface layer comprises polyethylene terephthalate.

8. The insulated cabinet according to any one of claims 1 to 7, wherein the enclosure (40) has a first film (42, 53) covering a first surface (39a) of the core material and a second film (43) covering a second surface (39b) of the core material (39), the second surface (39b) being located opposite the first surface (39a), and the first and second films (42, 43, 53) include respective weld layers which are welded to each other when an open end of the enclosure (40) is sealed, the weld layers comprising polyethylene or polypropylene.

9. The insulated cabinet according to any one of claims 1 to 8, wherein each enclosure (40) has a first film (42, 53) covering a first surface (39a) of the core material (39) and a second film (43) covering a second surface (39b) of the core material (39), the second surface (39b) being located opposite the first surface (39a), and the first and second films (42, 43, 53) include respective metal foil layers having gas barrier properties.

10. The insulated cabinet according to any one of claims 1 to 9, wherein the enclosures (40) include respective sealed parts (41) folded back to the outer plate (25a) side.

## Patentansprüche

1. Isolierschrank, umfassend:
eine äußere Platte (25a), die einen äußeren Kasten (25) bildet;
eine innere Platte (26a), die einen inneren Kasten (26) bildet, der in dem äußeren Kasten (25) bereitgestellt ist und ein Ablagefach (8) bildet, das von dem inneren Kasten (26) umgeben ist;
eine Vakuumisolationsplatte (27), die zwischen der äußeren Platte (25a) und der inneren Platte (26a) angeordnet ist und durch Dekomprimieren eines Innenraums eines Gehäuses (40) gebildet wird, wobei ein Kernmaterial (39) in dem Gehäuse (40) eingeschlossen ist, und durch Abdichten eines offenen Endes des Gehäuses (40); und
ein Begrenzungselement, welches das Eindringen eines Fluids aus dem abgedichteten Teil des Gehäuses (40) der Vakuumisolationsplatte (27) in das Gehäuse (40) begrenzt, **gekennzeichnet durch**
einen Bereich (46, 47, 48, 49, 61, 62), in den Fluid eindringen kann, der zwischen dem Ablagefach (8) und der Vakuumisolationsplatte (27) bereitgestellt ist, so dass ein Fluid dort hindurch eindringen kann.

2. Isolierschrank nach Anspruch 1, wobei das Begrenzungselement ein Klebeband (44) einschließt, das mindestens eine Endfläche des abgedichteten Teils des Gehäuses (40) bedeckt.

3. Isolierschrank nach Anspruch 1 oder 2, wobei das Begrenzungselement eine Schaumisolierung (28) einschließt, die in der Vakuumisolationsplatte (27) bereitgestellt ist, um ein Ende der Vakuumisolationsplatte (27) zu bedecken, in deren Ende sich der abgedichtete Teil des Gehäuses (40) befindet.

4. Isolierschrank nach einem der Ansprüche 1 bis 3, wobei die Vakuumisolationsplatte (27) ein Ende aufweist, das die innere Platte (26a) berührt.

5. Isolierschrank nach Anspruch 4, wobei der Bereich (46, 47, 48, 49, 61, 62), in den Fluid eindringen kann, eine Öffnung (35) aufweist, die in der inneren Platte (26a) ausgebildet ist.

6. Isolierschrank nach einem der Ansprüche 1 bis 5, wobei der innere Kasten (26) durch Kombinieren einer Vielzahl unterteilter innerer Platten (26A, 26B) miteinander aufgebaut ist.

7. Isolierschrank nach einem der Ansprüche 1 bis 6, wobei das Gehäuse (40) durch einen Film (42, 43) gebildet ist, der weiter durch Stapeln einer Vielzahl von Schichten gebildet wird, und eine äußerste Oberflächenschicht Polyethylenterephthalat umfasst.

8. Isolierschrank nach einem der Ansprüche 1 bis 7, wobei das Gehäuse (40) einen ersten Film (42, 53) aufweist, der eine erste Oberfläche (39a) des Kernmaterials bedeckt, und einen zweiten Film (43), der eine zweite Oberfläche (39b) des Kernmaterials (39) bedeckt, wobei die zweite Oberfläche (39b) gegenüber der ersten Oberfläche (39a) angeordnet ist und der erste und der zweite Film (42, 43, 53) entsprechende Schweißschichten einschließen, die miteinander verschweißt werden, wenn ein offenes Ende des Gehäuses (40) abgedichtet wird, wobei die Schweißschichten Polyethylen oder Polypropylen umfassen.

9. Isolierschrank nach einem der Ansprüche 1 bis 8, wobei jedes Gehäuse (40) einen ersten Film (42, 53) aufweist, der eine erste Oberfläche (39a) des Kernmaterials (39) bedeckt, und einen zweiten Film (43), der eine zweite Oberfläche (39b) des Kernmaterials (39) bedeckt, wobei sich die zweite Oberfläche (39b) gegenüber der ersten Oberfläche (39a) befindet und der erste und der zweite Film (42, 43, 53) entsprechende Metallfolienschichten einschließen, die Gasbarriereeigenschaften aufweisen.

10. Isolierschrank nach einem der Ansprüche 1 bis 9, wobei die Gehäuse (40) entsprechende abgedichtete Teile (41) aufweisen, die zur Seite der äußeren Platte (25a) zurückgefaltet sind.

## Revendications

1. Armoire isolée comprenant :
une plaque externe (25a) constituant un boîtier externe (25) ;
une plaque interne (26a) constituant un boîtier interne (26) disposé à l'intérieur du boîtier externe (25) et formant un compartiment de stockage (8) entouré par le boîtier interne (26) ;
un panneau d'isolation sous vide (27) intercalé entre la plaque externe (25a) et la plaque interne (26a) et formé par dépressurisation de l'intérieur d'une enceinte (40) avec un matériau de noyau (39) qui est confiné dans l'enceinte (40) et par scellement d'une extrémité ouverte de l'enceinte (40) ; et
un élément de limitation qui limite la pénétration d'un fluide à partir de la partie scellée de l'enceinte (40) du panneau d'isolation sous vide (27) dans l'enceinte (40), **caractérisée par**
une région dans laquelle peut pénétrer un fluide (46, 47, 48, 49, 61, 62) disposée entre le compartiment de stockage (8) et le panneau d'isolation sous vide (27) de telle sorte qu'un fluide puisse pénétrer à travers celle-ci.

2. Armoire isolée selon la revendication 1, dans laquelle l'élément de limitation inclut une bande adhésive (44) recouvrant au moins une surface d'extrémité de la partie scellée de l'enceinte (40).

3. Armoire isolée selon la revendication 1 ou 2, dans laquelle l'élément de limitation inclut une isolation en mousse (28) qui est disposée dans le panneau d'isolation sous vide (27) de sorte à recouvrir une extrémité du panneau d'isolation sous vide (27), dans laquelle extrémité la partie scellée de l'enceinte (40) est située.

4. Armoire isolée selon l'une quelconque des revendications 1 à 3, dans laquelle le panneau d'isolation sous vide (27) présente une extrémité en contact avec la plaque interne (26a).

5. Armoire isolée selon la revendication 4, dans laquelle la région dans laquelle peut pénétrer un fluide (46, 47, 48, 49, 61, 62) présente une ouverture (35) formée dans la plaque interne (26a).

6. Armoire isolée selon l'une quelconque des revendications 1 à 5, dans laquelle le boîtier interne (26) est construit en combinant une pluralité de plaques internes divisées (26A, 26B) ensemble.

7. Armoire isolée selon l'une quelconque des revendications 1 à 6, dans laquelle l'enceinte (40) est formée par un film (42, 43) formé en outre en empilant une pluralité de couches, et une couche de surface la plus extérieure comprend du polyéthylène téréphtalate.

8. Armoire isolée selon l'une quelconque des revendications 1 à 7, dans laquelle l'enceinte (40) présente un premier film (42, 53) recouvrant une première surface (39a) du matériau de noyau et un second film (43) recouvrant une seconde surface (39b) du matériau de noyau (39), la seconde surface (39b) étant située à l'opposé de la première surface (39a) et les premier et second films (42, 43, 53) incluent des couches de soudure respectives qui sont soudées les unes aux autres lorsqu'une extrémité ouverte de l'enceinte (40) est scellée, les couches de soudure comprenant du polyéthylène ou du polypropylène.

9. Armoire isolée selon l'une quelconque des revendications 1 à 8, dans laquelle chaque enceinte (40) présente un premier film (42, 53) recouvrant une première surface (39a) du matériau de noyau (39) et un second film (43) recouvrant une seconde surface (39b) du matériau de noyau (39), la seconde surface (39b) étant située à l'opposé de la première surface (39a) et les premier et second films (42, 43, 53) incluent des couches de feuille de métal respectives présentant des propriétés de barrière contre les gaz.

10. Armoire isolée selon l'une quelconque des revendications 1 à 9, dans laquelle les enceintes (40) incluent des parties scellées respectives (41) repliées vers le côté plaque externe (25a).
